# EUROPEAN PATENT SPECIFICATION

(11) **EP 2 535 308 B1**
(45) Date of publication and mention of the grant of the patent: **03.02.2016**
(21) Application number: 12171381.2
(22) Date of filing: 08.06.2012
(51) Int. Cl.: B66F 9/075, B62D 11/08, B62D 11/24

(54) **A traction axle for work machines.**
Traktionsachse für Arbeitsmaschine
Essieu de traction pour machines de travail

(30) Priority: 17.06.2011 IT MO20110151
(43) Date of publication of application: 19.12.2012
(73) Proprietor: FIVES OTO S.P.A., 42022 Boretto, Reggio Emilia (IT)
(72) Inventor: Chezzi, Aleardo, 42022 BORETTO, REGGIO EMILIA (IT)
(74) Representative: Colò, Chiara

(56) References cited:
- WO-A1-2010/099267
- US-A- 4 702 358
- US-A1- 2006 231 300

## Description

The present invention concerns a traction axle for self-propelling work machines.

In particular the invention relates to a front traction axle of lift trucks.

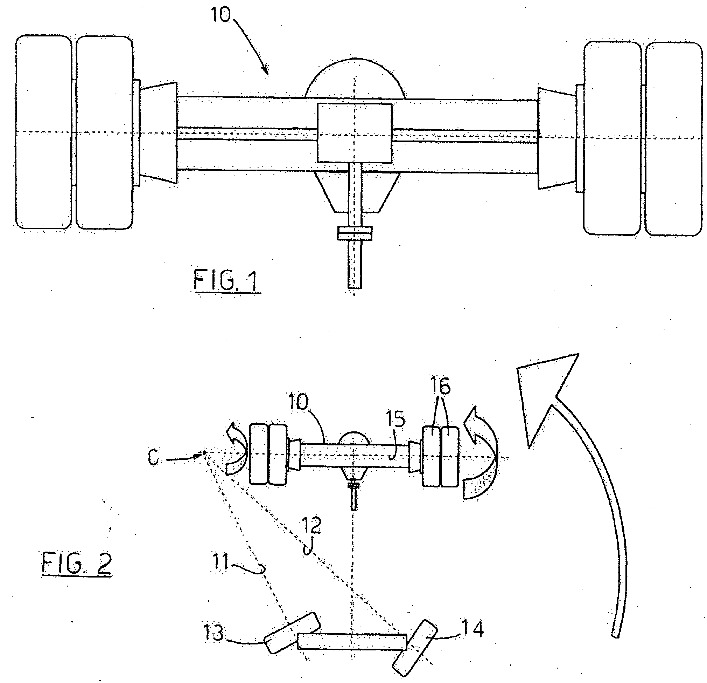

At present, as is known, the traction axle of self-propelling work machines destined for moving goods in specific areas, such as ports or areas in general destined for sorting containers and goods in general, comprises a differential box in input, arranged centrally on the axle, from which the motion transfer semi-axes depart towards the two gear-reducer groups complete with brakes, which comprise, in consideration of the high traction torque and the loads involved, two or more twinned wheels. Figure 1 illustrates the essential components of an axle of this type.

As with all traction axles of this type, when the work machine is steered, the two wheel groups rotate at different velocities but in any case in a same rotation direction, and the difference in velocity between the two wheel groups is greater the smaller the steering radius requested. In the schematic illustration of figure 2, the centre of rotation C of the vehicle is evidenced, during a steering step, given by the point of conjunction of the axes 11, 12, of the steering wheels 13, 14, and the point of conjunction is located on the axis 15 of the axle 10, in any case in an external position thereto. The configuration illustrated in the figure closely corresponds to the minimum-available smallest radius steering turn. This means that the steering space cannot be less than a limit constituted by the circumference having the centre positioned in the centre of rotation C, denoted in figure 2 and having a radius equal to the distance of the pair of external wheels 16 from said centre of rotation. **An example of a traction axle of the above type is known from** US 2006/231300.

In the typical applications of the above-mentioned work machines the manoeuvring capacity in small spaces is a feature of particular importance, in regard to the limits of working areas and also the size of the products to be moved. It is therefore easy to understand that any possible solution that can improve the above-mentioned manoeuvring capacity is particularly appreciated.

The main aim of the present invention is to provide a traction axle for work machines that enables obtaining minimal steering spaces for the machines themselves.

A further aim of the invention is to provide a traction axle for work machines which enables obtaining minimal steering spaces and which is also easily commandable and controllable.

The above and other aims are attained by a traction axle, in particular for work machines destined for the movement of containers, comprising a differential arranged centrally on the axle and two semi-axles for connecting the differential with wheel groups, characterised in that it comprises, installed on said two semi-axles, inverter groups of a rotation motion in output from the differential, said inverter groups being driven by a steering column and/or as a function of a requested steering angle. The inverter groups are advantageously associated to clutches, brake-clutches and couplers for facilitating the activating of the inverter. Following the activation of an inverter group, the wheel group connected thereto will rotate in an opposite direction to the other wheel group; thus the rotation centre of the vehicle will be internal of the two wheel groups, the exact location thereof being a function of the steering angle requested.

At the maximum requested steering angle, the two wheel groups will rotate at a same velocity and in an opposite direction, and the rotation centre of the vehicle will coincide with the centre of the traction axle, thus obtaining the result that the vehicle in practice can rotate on itself, about the vertical axis passing through the differential.

Thus the advantages with respect to vehicles at present in use are obvious, deriving essentially from the possibility of taking the centre of rotation of the vehicle internally of the space comprised between the drive wheels and thus reducing the steering space to the minimum possible.

Other characteristics and advantages of the present invention will more fully emerge from the detailed description that follows of a preferred but not exclusive embodiment of the invention, illustrated purely by way of non-limiting example in the accompanying figures of the drawings, in which:
- figure 3 is a schematic plan view of a traction axle of the invention;
- figure 4 schematically illustrates the arrangement of the steering wheels and the drive wheels of the vehicle in the configuration of the smallest steering radius obtainable with the axle of figure 3;
- figures 5, 6 show variant embodiments of the axle of the invention;
- figure 7 is a schematic overall view relating to sensor devices associated to the axle of the invention;
- figures 8, 9 illustrate in detail a side of the axle of the invention according to two variant embodiments.

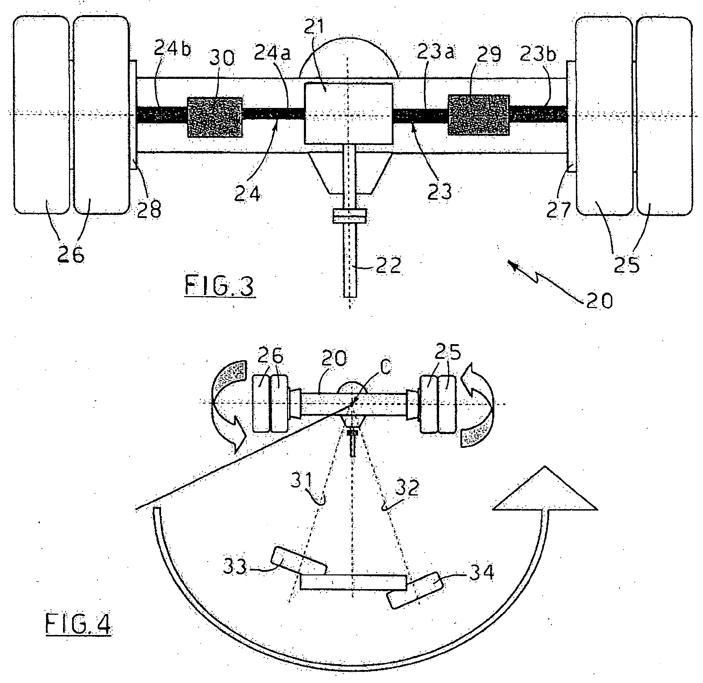

With reference to figure 3, a traction axle is denoted in its entirety by reference numeral 20, in particular for work machines of large dimensions and high performance. The axle 20 comprises, located centrally thereon, a differential 21 reached by the drive shaft 22 and from which two semi-axes 23, 24 branch off towards the two wheel groups 25, 26, complete with relative gear reducers/brake 27, 28. Respective motion inverter groups 29, 30 are mounted on the two semi-axes 23, 24. Each of the two semi-axes is thus composed of a first part 23a, 24a, comprised between the differential box 21 and the inverter group thereof, and a second part 23b, 24b, comprised between the inverter group and the respective wheel group. Differently to the axle of figure 1, with the above-described axle the wheel groups can rotate in opposite directions to one another; this occurs when one of the two inverter groups 29, 30 is activated. The rotation velocity of each of the two wheel groups 25, 26 continues normally to be controlled by the differential according to the degree of steering to be obtained.

In the extreme case illustrated in figure 4, the steering radius is substantially reduced to zero. The axes 31, 32 of the two steering wheels 33, 34 conjoin at the centre of the differential box 21, and the rotation centre C of the vehicle is located at that point; the vehicle can rotate about the vertical axis passing through said point. This configuration occurs only thanks to the fact that the two wheel groups of the axle 20 can rotate in opposite directions to one another; note that in the extreme case illustrated in the figure, the rotation velocity is identical, while said velocity differs by however much the rotation centre C distances from the vertical axis of the differential gradually as a smaller amount of steering is required. As a gradually smaller degree of steering is requested, at the moment when said rotation centre C becomes positioned at one of the two wheel groups, the rotation velocity of the group is zeroed and then restarts in the opposite direction, i.e. in a same direction as the direction of the other wheel group, as said centre C is located externally of the space comprised between the two, and from this point onwards has the same behaviour as vehicles provided with a traditional axle.

It is useful to stress that the above-described inversion of the rotation velocity of the wheel group occurs following the activation of the motion inverter group corresponding to said wheel group, the activation taking place automatically according to the command on the steering and the various positioning and status signals coming from the sensors associated to the vehicle wheels and to various associated devices according to known processes to the inverter groups such as to facilitate activation thereof.

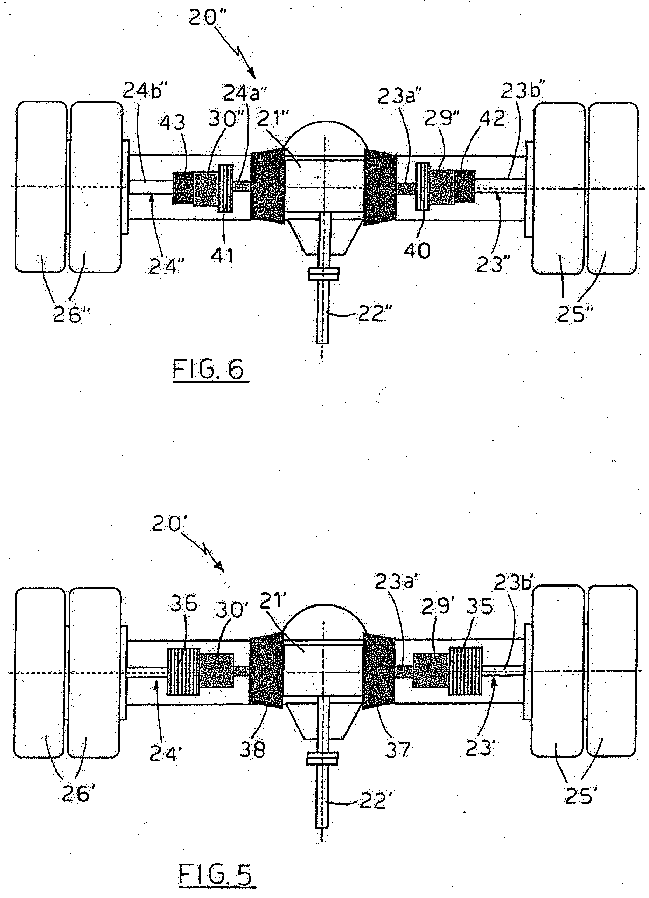

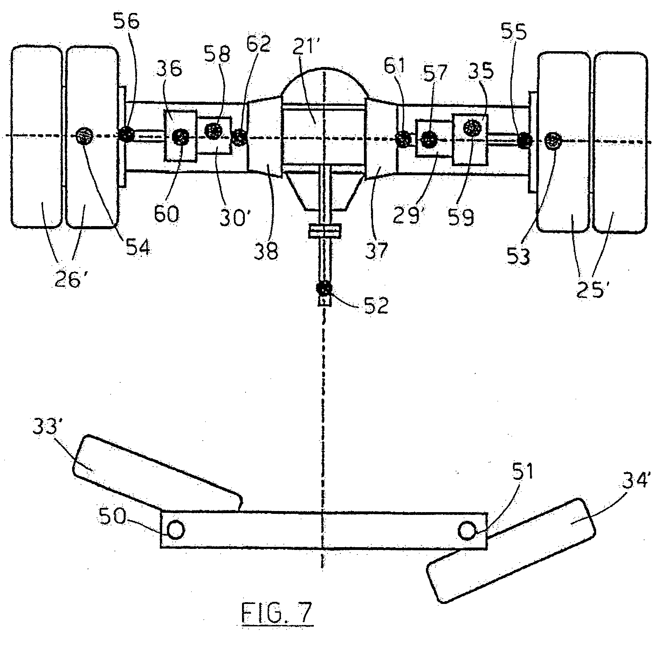

A possible structural configuration of the sensors and relative devices is given in figure 7 and relates, in particular, to the embodiment of the invention illustrated in figure 5.

This variant comprises, apart from the motion inverter groups 29', 30' installed on the two semi-axes 23', 24', clutch groups 35, 36 arranged between the inverter groups and the wheel groups and further comprises brake groups 37, 38 arranged between said inverter groups and the differential 21'.

The automatic functioning of the axle in this case occurs with the aid of the sensor devices of figure 7. The rotation centre C of the vehicle is calculated by measuring the angle of rotation of the steering wheels 33', 34', which measurement is carried out by the position sensors 50, 51, associated to said steering wheels. When the centre of rotation, on increasing the degree of steering required, for example in proximity of the wheel 25', moves from outside in proximity of the internal wheel to the curve, for example in proximity of the wheel 25', the brake relative to said wheel is activated, as is the brake 37 located on the relative semi-axis, the clutch 35 present between the inverter 29' and the wheel 25' is also released such that the wheel 25' is idle and while it functions as a pivot for the rotation of the vehicle, which rotation takes place thanks to the drawing generated by the external wheel 26' on which the entire drive torque acts in output from the differential 21', the motion inverter 29' can be activated securely, without any risk of brusque couplings, the positioning of the centre of rotation C internally of the axle obtained, at most, a substantially zero radius of rotation of the vehicle according to the diagram of figure 4.

The above-described functioning is controlled and made possible by a suitable control unit able to command the actuators of the above-mentioned brake, clutch and inverter groups, by processing the signals coming from both the position sensors 50, 51 of the steering wheels, and from the sensor 52 of the rotation velocity in input to the differential 21', as well as the sensors 53, 54 of the velocity and the rotation direction of said wheel groups 25', 26', from the sensors 55, 56 of the brake pressure of said wheel groups 25', 26', from the sensors 57, 58 of the position of said inverter groups 29', 30', from the sensors 59, 60 of the state of engagement of the clutch groups 35, 36, from the sensors 61, 62 of the braking pressure of the brake group 37, 38, arranged between said inverter groups 29', 30' and said differential 21'.

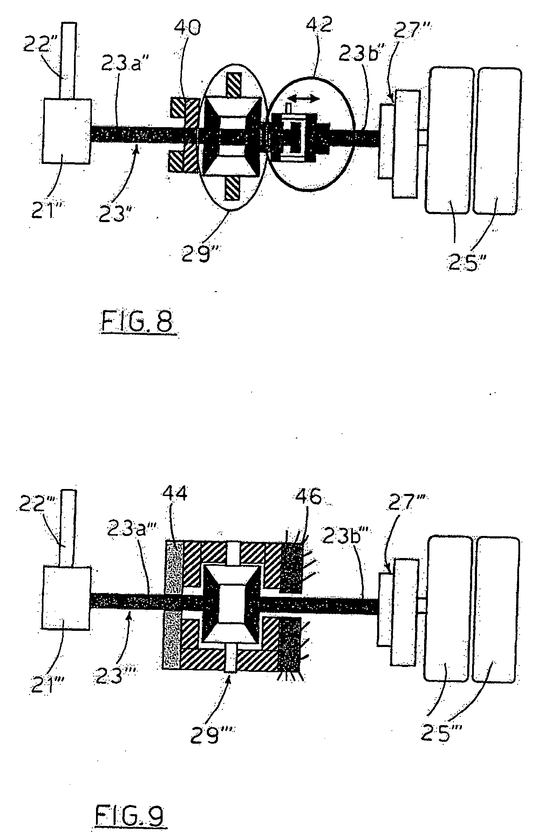

In the embodiment of the invention illustrated in figure 6 and figure 8, the following are installed on the semi-axes 23", 24": motion inverter groups 29", 30", clutch/brake groups 40, 41, arranged between said inverter groups and the differential 21", gear reducer/brake groups 27", and equivalent 28", not illustrated in the figures, wheel groups 25", 26", couplers 42, 43, arranged between the inverter groups and the wheel groups. The couplers 42, 43 are destined to connect the semi-axes 23b", 24b" to the output gearings of the inverters 29", 30", as can be seen from the use configuration illustrated in figure 8, and therefore have an opposite rotation to the output rotation of the differential 21", or are destined to connect the semi-axes 23b", 24b" directly to the semi-axes 23a", 24a", which pass through the inverters and therefore have the same rotation direction.

As in the case of the preceding variant, in this case too the functioning is such as to enable secure-mode inversion of the semi-axes connected to the wheels. When, on increase of the degree of steering required, the rotation centre reaches from outside to in proximity of the internal wheel in the curve, for example in proximity of the wheel 25", the brake relating to said wheel is activated, as is the clutch/brake 40 located on the semi-axis in output from the differential, and thus, with the two semi-axes 23a" and 23b" blocked, the coupler 42 can be commanded without any risk of brusque coupling, and thus as soon as the brake and the clutch/brake 40 are released, inversion of motion of the semi-axis 23b" and the wheel group 25" connected thereto is obtained, such as to enable, as in the preceding case, the positioning of the rotation centre C internally of the axle, and, at most, the substantially null radial rotation of the vehicle, according to the diagram of figure 4.

In the embodiment of the invention illustrated in figure 9, which relates, as figure 8 for simplicity of illustration, to one side only of the traction group, installed on semi-axles 23"', and equivalent 24"' are: motion inverter groups 29"', and equivalent 30"', clutch/brake/coupler groups 44, and equivalent 45, arranged between said inverter groups and said inverter groups and the differential 21"; gear reducer/brake groups 27"' and equivalent 28"', wheel groups 25"' and equivalent 26"', further clutch/brake/coupler groups 46, and equivalent 47, arranged between the inverter groups and the wheel groups, the equivalents 24"', 30"', 45, 28"', 26"', 47, not being illustrated in the figure as they relate to the semi-axis 24b"' of the other side of the traction group.

The clutch/brake/coupler groups 46, 47 are destined to connect the boxes of the inverter groups 29"', 30"' with the frame of the axle, and then, when said groups 46, 47 are activated there is a rotation of the semi-axles 23b"', 24b"' opposite the rotation of the semi-axles 23a"', 24a"' in output from the differential 21"'. The clutch/brake/coupler groups 44, 45 are destined to connect the boxes of the inverter groups 29"', 30"' with the semi-axles 23a"', 24a"' in output from the differential 21"', and from this it derives that when said groups 44, 45 are activated and the like wheel side groups 46, 47 not activated the rotation of the semi-axles 23b"', 24b"' is equal to the rotation of the semi-axles 23a", 24a".

As in the preceding case, when the rotation centre of the vehicle, on increasing the degree of steering required, reaches from the outside to in proximity of the internal wheel of the curve, for example in proximity of the wheel 25"', the brake 27"' of that wheel is activated such that it can be a pivot for the rotation itself; after which the clutch/brake/coupler group 46 is activated and the clutch/brake/coupler group 44 is deactivated, obtaining in this way an opposite rotation direction of the two parts 23a"' and 23b"'of the semi-axle 23"', and thus, definitively, an opposite rotation direction of the two wheel groups of the axle, from which the position of the rotation centre C internally of the wheels of said axle derives. Obviously, in the opposite operation, on reducing the steering degree required, when the rotation centre of the vehicle reaches from the inside in proximity of the internal wheel in the curve, for example in proximity of the wheel 25"', the brake 27"' is possibly activated that is relative to said wheel, and the clutch/brake/coupling group 46 is deactivated and the clutch/brake/coupler group 44 simultaneously activated, such as to obtain the same rotation of the two parts 23a"' and 23b"' of the semi-axle 23"', and thus, definitively, the same rotation direction of the two wheel groups of the axle.

Certainly further solutions and structural configurations are comprised, comprising devices, associated or integrated in the inverter groups, which can enable positioning of the rotation centre C internally of the axle automatically and according to the degree of steering required.

It is clear that the above characteristic derives from the installation of the inverter groups on the two semi-axes of the axle, whether said inverters are associated or not to devices which facilitate activation thereof.

There can for example be other brake groups, clutch groups, clutch/brake groups or various couplers which operate in conjunction with the inverters, and other sensors and actuators that enable automatic command of said devices according to the steering command set by the operator. Modifications of a practical-applicational nature can also be made to the constructional details of the variants and exemplary embodiments described herein above, without forsaking the scope of protection of the **invention** as claimed herein below.

## Claims

1. A traction axle, in particular for work machines, comprising a differential (**21**) arranged centrally on said axle (**20**) and two semi-axles (**23,24**) for connecting the differential with wheel groups (**25,26**), **characterized in that** it comprises, installed on said two semi-axles (**23,24**), inverter groups (**29,30**) of a rotation motion in output from the differential (**21**), said inverter (**29,30**) groups being driven by a steering column and/or as a function of a requested steering angle.

2. The traction axle (20) according to the preceding claim, **characterised in that**, as a function of the steering angle requested, the activation of one of said inverter groups (29, 30) gives rise to a positioning of a centre of rotation C of the vehicle internally of the two wheel groups (25, 26) of said axle.

3. The traction axle (20) according to the preceding claim, **characterised in that** the activation of said motion inverter groups is done in automatic mode.

4. The traction axle (20') according to one of the preceding claims, **characterised in that** it comprises, installed on said semi-axles (23', 24'), motion inverter groups (29', 30'), clutch groups (35, 36) arranged between said inverter groups and said wheel groups, brake groups (37, 38) arranged between said inverter groups and said differential (21').

5. The traction axle (20') according to the preceding claim, **characterised in that** said clutch groups (35, 36) are comprised in said motion inverter groups (29', 30').

6. The traction axle (20") according to one of claims from 1 to 3, **characterised in that** it comprises, installed on said semi-axles (23", 24"), motion inverter groups (29", 30"), clutch/brake groups (40, 41) arranged between said inverter groups and said differential (21 "), couplers (42, 43) arranged between said inverter groups and said wheel groups.

7. The traction axle (20")according to the preceding claim, **characterised in that** said clutch/brake groups (40, 41) and said couplers (42, 43) are comprised in said motion inverter groups (29", 30").

8. The traction axle (20"') according to one of claims from 1 to 3, **characterised in that** it comprises, installed on semi-axles (23"', 24"'), motion inverter groups (29"', 30"'), clutch/brake/coupler groups (44, 45) arranged between said inverter groups and said differential (21"), clutch/brake/coupler groups (46, 47) arranged between said inverter groups and said wheel groups (25"', 26"').

9. The traction axle according to one of claims from 2 to **8**, **characterised in that** said wheel groups (25, 26) comprise gear reducer/brake groups (27, 28).

10. The traction axle according to claim 3, **characterised in that** it comprises position sensor devices (50, 51) associated to the steering wheels of the vehicle, sensor devices (52) of the rotation velocity in input to said differential, sensor devices (53, 54) of the velocity and the rotation direction of said wheel groups (25,26), sensor devices (55, 56) of a pressure of the brakes of said wheel groups (25, 26), sensor devices (57, 58) of a position of said inverter groups (29, 30), sensor devices (59, 60) of a state of engagement of said clutch groups (35, 36), sensor devices (61 62) of a brake pressure of said brake groups (37, 38) arranged between said inverter groups(29',30')and said differential (21').

## Patentansprüche

1. Traktionsachse, insbesondere für Arbeitsmaschinen, umfassend ein Differenzial (21), das mittig an dieser Achse (20) angeordnet ist, und zwei Achswellen (23, 24) zum Verbinden des Differenzials mit Radgruppen (25, 26), **dadurch gekennzeichnet, dass** sie Umrichtergruppen (29, 30) einer Rotationsbewegung im Abtrieb vom Differenzial (21) umfasst, die an den zwei Achswellen (23, 24) montiert sind, wobei die Umrichtergruppen (29, 30) über eine Lenksäule und/oder basierend auf einem geforderten Lenkeinschlagwinkel gesteuert werden.

2. Traktionsachse (20) nach dem vorhergehenden Anspruch, **dadurch gekennzeichnet, dass** die Aktivierung einer der Umrichtergruppen (29, 30) basierend auf dem geforderten Lenkeinschlagwinkel zu einer Positionierung einer Rotationsmitte C des Fahrzeugs in den zwei Radgruppen (25, 26) der Achse führt.

3. Traktionsachse (20) nach dem vorhergehenden Anspruch, **dadurch gekennzeichnet, dass** die Aktivierung der Bewegungsumrichtergruppen automatisch erfolgt.

4. Traktionsachse (20') nach einem der vorhergehenden Ansprüche, **dadurch gekennzeichnet, dass** sie montiert an den Achswellen (23', 24') Bewegungsumrichtergruppen (29', 30'), Kupplungsgruppen (35, 36), die zwischen den Umrichtergruppen und den Radgruppen angeordnet sind, Bremsgruppen (37, 38), die zwischen den Umrichtergruppen und dem Differenzial (21') angeordnet sind, umfasst.

5. Traktionsachse (20') nach dem vorhergehenden Anspruch, **dadurch gekennzeichnet, dass** die Kupplungsgruppen (35, 36) in den Umrichtergruppen (29', 30') umfasst sind.

6. Traktionsachse (20") nach einem der Ansprüche 1 bis 3, **dadurch gekennzeichnet, dass** sie montiert an den Achswellen (23", 24") Bewegungsumrichtergruppen (29", 30"), Kupplungs-/Bremsgruppen (40, 41), die zwischen den Umrichtergruppen und dem Differenzial (21") angeordnet sind, Koppler (42, 43), die zwischen den Umrichtergruppen und den Radgruppen angeordnet sind, umfasst.

7. Traktionsachse (20") nach dem vorhergehenden Anspruch, **dadurch gekennzeichnet, dass** die Kupplungs-Bremsgruppen (40, 41) und die Koppler (42, 43) in den Bewegungsumrichtergruppen (29", 30") umfasst sind.

8. Traktionsachse (20"') nach einem der Ansprüche 1 bis 3, **dadurch gekennzeichnet, dass** sie montiert an den Achswellen (23"', 24"') Bewegungsumrichtergruppen (29"', 30"'), Kupplungs-/Brems-/Kopplerguuppen (44, 45), angeordnet zwischen den Umrichtergruppen und dem Differenzial (21 "), Kupplungs-/Brems-/Kopplergruppen (46, 47), angeordnet zwischen den Umrichtergruppen und den Radgruppen (25"', 26"'), umfasst.

9. Traktionsachse nach einem der Ansprüche 2 bis 8, **dadurch gekennzeichnet, dass** die Radgruppen (25, 26) Vorgelege-/Bremsgruppen (27, 28) umfassen.

10. Traktionsachse nach Anspruch 3, **dadurch gekennzeichnet, dass** sie Positionssensorvorrichtungen (50, 51), die mit den Lenkrädern des Fahrzeugs assoziiert sind, Sensorvorrichtungen (52) der Drehgeschwindigkeit im Eingang zum Differenzial, Sensorvorrichtungen (53, 54) der Drehzahl und Drehrichtung der Radgruppen (25, 26), Sensorvorrichtungen (55, 56) eines Drucks der Bremsen der Radgruppen (25, 26), Sensorvorrichtungen (57, 58) einer Position der Umrichtergruppen (29, 30), Sensorvorrichtungen (59, 60) eines Einrückungszustands der Kupplungsgruppen (35, 36), Sensorvorrichtungen (61, 62) eines Bremsdrucks der Bremsgruppen (37, 38), angeordnet zwischen den Umrichtergruppen (29', 30') und dem Differenzial (21'), umfasst.

## Revendications

1. Essieu de traction, en particulier pour machines de travail, comprenant un différentiel (21) disposé centralement sur ledit essieu (20) et deux demi-essieux (23, 24) servant à relier le différentiel aux groupes de roues (25, 26), **caractérisé en ce qu'**il comprend, installés sur lesdits deux demi-essieux (23, 24), des groupes inverseurs (29, 30) d'un mouvement de rotation en sortie du différentiel (21), lesdits groupes inverseurs (29, 30) étant entraînés par une colonne de direction et/ou en fonction d'un angle de braquage demandé.

2. Essieu de traction (20) selon la revendication précédente, **caractérisé en ce que**, en fonction de l'angle de braquage demandé, l'activation d'un desdits groupes inverseurs (29, 30) entraîne un positionnement d'un centre de rotation C du véhicule au sein des deux groupes de roues (25, 26) dudit essieu.

3. Essieu de traction (20) selon la revendication précédente, **caractérisé en ce que** l'activation desdits groupes inverseurs de mouvement s'effectue en mode automatique.

4. Essieu de traction (20') selon l'une des revendications précédentes, **caractérisé en ce qu'**il comprend, installés sur lesdits demi-essieux (23', 24'), des groupes inverseurs de mouvement (29', 30'), des groupes embrayage (35, 36) disposés entre lesdits groupes inverseurs et lesdits groupes de roues, des groupes freins (37, 38) disposés entre lesdits groupes inverseurs et ledit différentiel (21').

5. Essieu de traction (20') selon la revendication précédente, **caractérisé en ce que** lesdits groupes embrayage (35, 36) sont compris dans lesdits groupes inverseurs de mouvement (29', 30').

6. Essieu de traction (20") selon l'une des revendications de 1 à 3, **caractérisé en ce qu'**il comprend, installés sur lesdits demi-essieux (23", 24"), des groupes inverseurs de mouvement (29", 30"), des groupes embrayage/frein (40, 41) disposés entre lesdits groupes inverseurs et ledit différentiel (21"), des coupleurs (42, 43) disposés entre lesdits groupes inverseurs et lesdits groupes de roues.

7. Essieu de traction (20") selon la revendication précédente, **caractérisé en ce que** lesdits groupes embrayage/frein (40, 41) et lesdits coupleurs (42, 43) sont compris dans lesdits groupes inverseurs de mouvement (29", 30").

8. Essieu de traction (20"') selon l'une des revendications de 1 à 3, **caractérisé en ce qu'**il comprend, installés sur les demi-essieux (23"', 24"'), des groupes inverseurs de mouvement (29"', 30"'), des groupes embrayage/frein/coupleur (44, 45) disposés entre lesdits groupes inverseurs et ledit différentiel (21"), des groupes embrayage/frein/coupleur (46, 47) disposés entre lesdits groupes inverseurs et lesdits groupes de roues (25"', 26"').

9. Essieu de traction selon l'une des revendications de 2 à 8, **caractérisé en ce que** lesdits groupes de roues (25, 26) comprennent des groupes réducteur de vitesse/frein (27, 28).

10. Essieu de traction selon la revendication 3, **caractérisé en ce qu'**il comprend des dispositifs capteurs de position (50, 51) associés aux roues directrices du véhicule, des dispositifs capteurs (52) de la vitesse de rotation en entrée dudit différentiel, un dispositif capteur (53, 54) de la vitesse et du sens de rotation desdits groupes de roues (25, 26), des dispositifs capteurs (55, 56) d'une pression de freinage desdits groupes de roues (25, 26), des dispositifs capteurs (57, 58) d'une position desdits groupes inverseurs (29, 30), des dispositifs capteurs (59, 60) d'un état d'insertion desdits groupes embrayage (35, 36), des dispositifs capteurs (61, 62) d'une pression de freinage desdits groupes freins (37, 38) disposés entre lesdits groupes inverseurs (29', 30') et ledit différentiel (21').
